# EUROPEAN PATENT APPLICATION

(11) **EP 3 392 812 A1**
(43) Date of publication of application: **24.10.2018**
(21) Application number: 18155854.5
(22) Date of filing: 08.02.2018
(51) Int. Cl.: G06Q 10/06

(54) **AUTO-EXPORT OF HEALTH AND USAGE MANAGEMENT SYSTEM DATA**

(30) Priority: 17.04.2017 US 201715489329
(71) Applicant: Simmonds Precision Products, Inc., Vergennes, VT 05491 (US)
(72) Inventor: BERENBAUM, Arthur, Addison, VT Vermont 05491 (US); BERGERON, Jessica, Vergennes, VT Vermont 05491 (US); SMITH, Katelin, Williston, VT Vermont 05495 (US); LAPOINTE, Wilhelm, Richmond, VT Vermont 05477 (US)
(74) Representative: Dehns

(57) **Abstract**

A method for exporting health and usage management system (HUMS) data includes storing a first template on a computing device including a processor and a memory storage device, monitoring a folder for the addition of a HUMS data file; filtering the HUMS data file using steps set out in the first template to select and organize a first subset of data; creating a first filtered data set that includes the selected and organized first subset of data; and automatically exporting the first filtered data set to a first location. The first template includes executable steps for selecting the first subset of data from the HUMS data file and organizing the first subset of data.

## Description

### BACKGROUND

The present disclosure relates to selecting (i.e., filtering) and exporting data, and more particularly, to automatically exporting a subset of health and usage management system (HUMS) data in a computing environment.

Some vehicles, such as military and commercial aircraft, can be equipped with various sensors to measure conditions of various sub-systems of the aircraft during operation. Significant amounts of HUMS data can be generated from the sensors during operation of the aircraft. The data generated from the sensors may be stored onboard the aircraft and/or archived in one or more data locations for later retrieval.

Personnel may desire to view a subset of the HUMS data in one or more formats. For example, maintenance personnel may desire to view a subset of the data collected from the sensors for diagnostics and troubleshooting activities. Other personnel, such as engineering and test personnel or fleet management staff, may desire to view a subset of the data collected from the sensors to determine various performance characteristics of the aircraft for development or logistics purposes.

The nature of HUMS is that it produces a large amount of complex data which may be difficult for the maintenance, engineering, and test personnel to sort through to find the desired subset of data. Further, because of the large amount of data, exporting the entirety of the HUMS data to the desired personnel can be problematic due to system constraints. Thus, there is need to filter the HUMS data to select the desired subset of data, organize the filtered subset of data, and export that filtered data set to the desired personnel suited to analyze the filtered data set.

### SUMMARY

A method for exporting health and usage management system (HUMS) data includes storing a first template on a computing device including a processor and a memory storage device, monitoring a folder for the addition of a HUMS data file; filtering the HUMS data file using steps set out in the first template to select and organize a first subset of data; creating a first filtered data set that includes the selected and organized first subset of data; and automatically exporting the first filtered data set to a first location. The first template includes executable steps for selecting the first subset of data from the HUMS data file and organizing the first subset of data.

A system for exporting health and usage management system (HUMS) data includes a storage module, a monitoring module, an execution module, and an export module. The storage module is configured to store a first template with the first template including executable steps for selecting a first subset of data from a HUMS data file and organizing the first subset of data. The monitoring module is configured to monitor a digital folder for the addition of the HUMS data file. The execution module that is a computing device including a processor and a memory storage device. Additionally, the execution module is operatively coupled to the storage module and to the monitoring module and configured to filter the HUMS data file when the HUMS data file is added to the folder using the steps of the first template to select and organize the first subset of data to create a first filtered data set comprising the selected and organized first subset of data. The export module is operatively coupled to the execution module and is configured to automatically export the first filtered data set to a first location.

### BRIEF DESCRIPTION OF THE DRAWINGS

FIG. 1 is a schematic illustration of a HUMS system.
FIG. 2A is a schematic block diagram of a data filtration and export system.
FIG. 2B is a view of a graphical user interface of the data filtration and export system.
FIG. 2C is another view of the graphical user interface of the data filtration and export system showing a variety of filter types for creating a template.
FIG. 2D is another view of the graphical user interface of the data filtration and export system showing a variety of sub-filter types for creating the template.
FIG. 2E is another view of the graphical user interface of the data filtration and export system showing an auto-export feature.
FIG. 2F is another view of the graphical user interface of the data filtration and export system showing an export location designation feature.
FIG. 3 is a sample report exported by the data filtration and export system.
FIG. 4 is a flow diagram of a process of exporting health and usage management system data.

### DETAILED DESCRIPTION

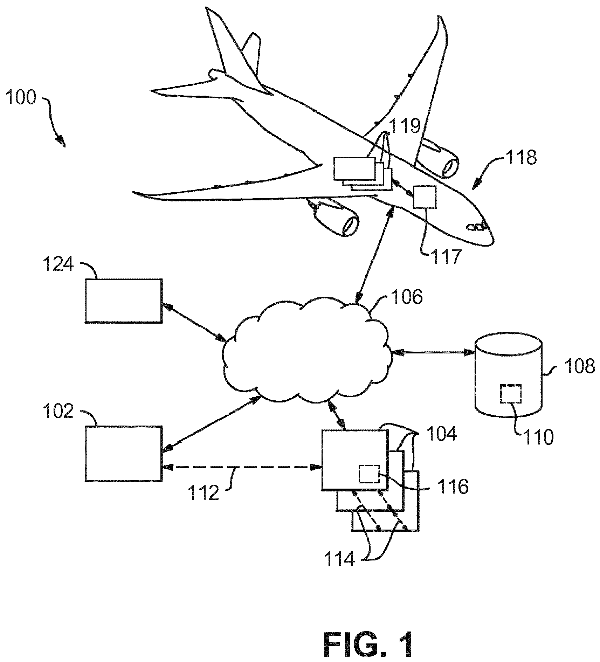

FIG. 1 illustrates an example computing architecture or system for use with a health and usage monitoring system (herein referred to as "HUMS" or "system"). System 100 includes host computer 102, one or more client computers 104 (which can include peer-to-peer interface 114 and environment 116), network 106, storage system 108 (which can include database 110), direct client interface 112, collection system 117 on vehicle 118 (which can include sensors 119), and control station 124.

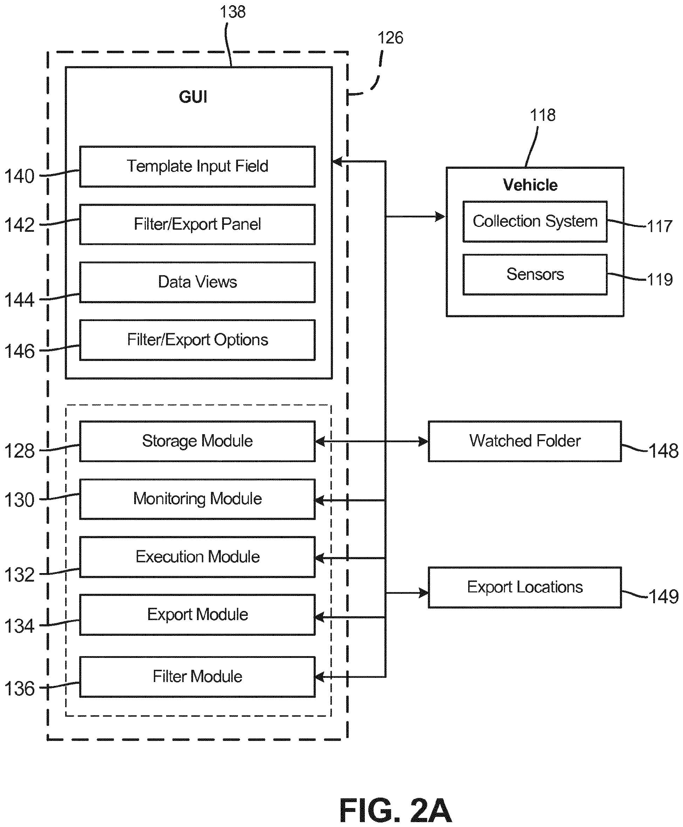

Host computer 102 can include a HUMS data filtration and export system, as will be described in detail below with regard to FIGS. 2A-2F (the HUMS data filtration and export system allows for filtration and export functions of HUMS data). Host computer 102 may include one or more of a computer processor, memory, storage means, network device, and input and/or output devices and/or interfaces. Host computer 102 is configured to execute one or more software programs. In one example, host computer 102 can be more than one computer jointly configured to process software instructions serially or in parallel. In some examples, host computer 102 is in communication with one or more networks such as network 106 comprised of one or more computing devices. Network 106 may be a private local area network (LAN), a private wide area network (WAN), the Internet, a mesh network, or any other network as is known in the art.

System 100 additionally can include one or more client computers 104, which can be at various remote locations to which the HUMS data or a subset of the HUMS data is exported. Host computer 102 and one or more client computers 104 can include one or more of a computer processor, memory, storage means, network device and input and/or output devices and/or interfaces according to some examples. The memory may, for example, include UVPROM, EEPROM, FLASH, RAM, ROM, DVD, CD, a hard drive, or other computer readable medium which may store data and/or the HUMS filtering and exporting software of this description.

Host computer 102 and one or more client computers 104 may be a desktop computer, laptop computer, smart phone, tablet, or any other computer device. In some examples, one or more of host computer 102 and the one or more client computers 104 include an input device, such as a keyboard and mouse, and one or more output devices, such as a monitor, speakers, printers, etc. System 100 facilitates communication with the other systems and/or components of network 106.

In some examples, each of client computers 104 is a user workstation capable of accessing and locally running HUMS filtering and exporting software to allow for an end user to select (i.e., filter) and export HUMS data. Each of client computers 104 can include environment 116. Environment 116 can be operable to perform one or more HUMS filtering and exporting functions, for example. In other examples, at least one of client computers 104 is operable to execute different HUMS filtering and exporting functions. Environment 116 can be configured to provide a display or visualization of vehicle data, and can be provided via a graphical user interface (herein referred to as "GUI"), such as GUI 138 of data filtration and export system 126 as described below in regards to FIGS. 2A-2F. Other examples can provide for one or more client computers 104 that do not perform HUMS filtering and exporting functions and are only configured to accept a subset of the HUMS data from host computer 102 or another location that is able to perform HUMS filtering and exporting functions. In this example, client computers 104 do not need to contain one or more HUMS filtering and exporting functions, and the users at client computers 104 receiving the filtered HUMS data do not need to know how to filter the HUMS data, because the HUMS filtering functions can be performed before the filtered data set of the HUMS data is exported to client computers 104.

In some examples, one or more client computers 104 are configured to communicate with host computer 102 directly via direct client interface 112 or over network 106. The one or more client computers 104 can be configured to execute one or more software programs, such as a HUMS data filtering and export system. The HUMS data filtering and export system can be configured to communicate with host computer 102 either over network 106 or directly through direct client interface 112. In another example, one or more client computers 104 are configured to communicate with each other directly via peer-to-peer interface 114. In one example, host computer 102 and one or more client computers 104 are the same physical computing device. In another example, host computer 102 and one or more client computers 104 are emulated as different instances of a virtual machine.

System 100 additionally can include storage system 108, which in some examples is operable to store the HUMS data provided to storage system 108 by vehicle 118 and provide access to the HUMS data by host computer 102, client computers 104, and the other components of system 100. Storage system 108 can be remote from the data filtration and export system and can be configured to convey at least a subset of the HUMS data to the data filtration and export system when prompted, whether data filtration and export system is located on host computer 102, client computers 104, or the other components of system 100. In one example, storage system 108 is a storage area network device (SAN) configured to communicate with host computer 102, one or more client computers 104, and/or other components of system 100 over network 106. In another example, storage system 108 is located within host computer 102, within at least one of client computers 104, or on vehicle 118. Storage system 108 may be configured to store one or more of computer software instructions, the HUMS data filtration and export system, HUMS data, database files, configuration information, etc., depending on the needs of a particular situation.

In some examples, system 100 is a client-server architecture configured to execute computer software on host computer 102, which can be accessible by one or more client computers 104 using either a thin client application or a web browser executing on the one or more client computers 104. In some examples, host computer 102 loads the computer software instructions from local storage, or from storage system 108, into memory and executes the computer software using the one or more computer processors.

In some examples of system 100, HUMS data from vehicle 118 is stored within one or more databases 110 at a central location, such as storage system 108, database 110, host computer 102, or another location in network 106. In another example, database 110 is a distributed database provided by one or more client computers 104. Further, database 110 can be an in-memory database. Database 110 is configured to store data from one or more systems, such as at least one vehicle 118. Although vehicle 118 is described in the context of a fixed wing aircraft, database 110 can store data from other vehicles such as rotary aircraft, ground-based systems, marine systems, and from other manned and unmanned systems generating, collecting, storing, or otherwise communicating HUMS data. Further, database 110 can store data from another, non-moving system (i.e., a system that is not a vehicle) such that the HUMS data filtration and export system filters and exports data that is not from a vehicle.

In the illustrated example of FIG. 1A, vehicle 118 includes at least one collection system 117 for collecting HUMS data from vehicle 118. Collection system 117 can be coupled to one or more sensors 119 configured to detect conditions of various subsystems of vehicle 118 for performance monitoring, diagnostics, and the like. Example subsystems can include engines and controls, communications and electronics, environment control systems, fuel and lubrication systems, electrical power generation equipment, and other accessories. In some examples, one or more control stations 124 are configured to communicate vehicle data between vehicle 118 and database 110. In other examples, vehicle 118 stores vehicle data directly to database 110 via network 106 or another connection. Collection system 117 can be configured to store the HUMS data for access by host computer 102, client computers 104, storage system 108, and the other components of system 100.

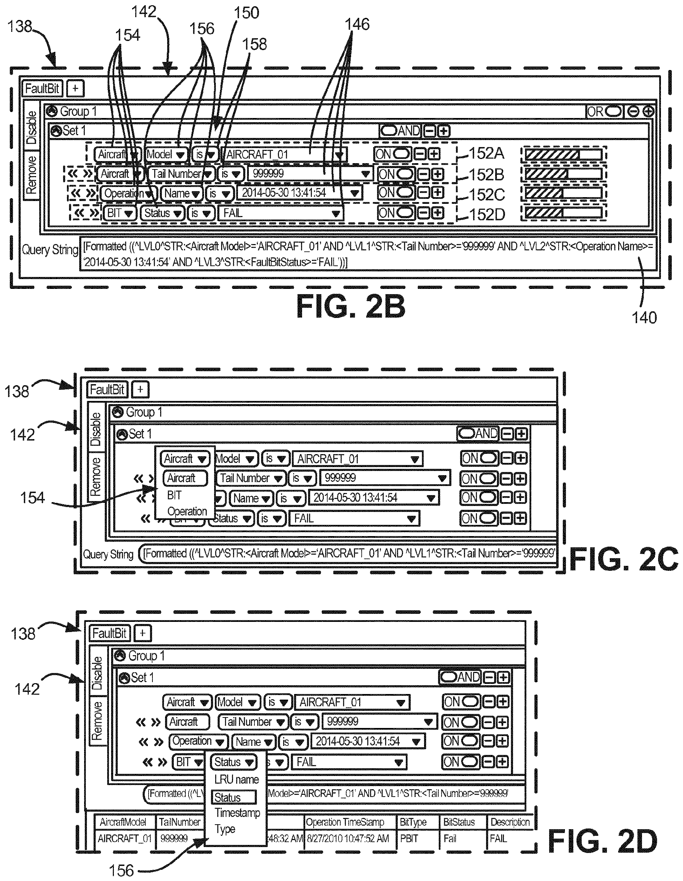

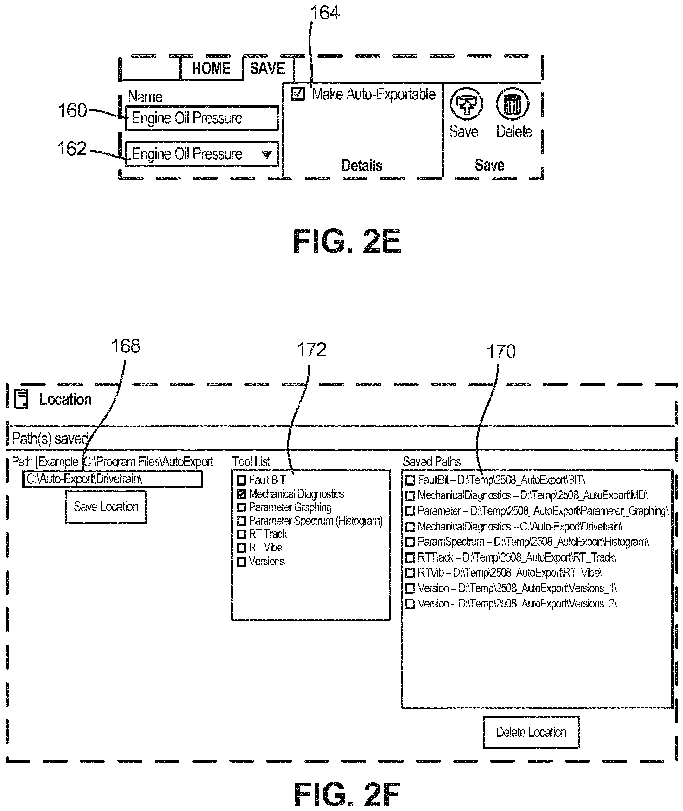

2A is a schematic of data filtration and export system 126, which is part of HUMS system 100 of FIG. 1A. FIG. 2B is a view of a graphical user interface (GUI) of data filtration and export system 126. FIG. 2C is another view of the GUI showing a variety of filter types for creating the template. FIG. 2D is another view of the GUI showing a variety of sub-filter types for creating the template. FIG. 2E is another view of the GUI showing an auto-export feature. FIG. 2F is another view of the GUI showing an export location designation feature. Data filtration and export system 126 includes storage module 128, monitoring module 130, execution module 132, export module 134, filter module 136, and at least one graphical user interface (GUI) 138. GUI 138 includes template input field 140, filter/export panel 142, data views 144, and filter/export options 146. Also part of system 100 and shown in FIG. 2A is vehicle 118 with collection system 117 and sensor 119, watched folder 148, and export locations 149. Viewable through the use of GUI 138 is graphical representation 150, filter statements 152A-152D, filter types 154, sub-filter types 156, operators 158, template name 160, saved template select 162, auto-export select 164, path designation 168, export location list 170, and template select 172.

Data filtration and export system 126 is configured to allow for filtration (i.e., selection and organization/arrangement) and export of HUMS data generated by sensors 119 on vehicle 118. In some examples, data filtration and export system 126 is provided as a portion of another system, such as an add-on software program to another computer system. In other examples, data filtration and export system 126 is a standalone software program. In one example, data filtration and export system 126 is provided by a tangible or non-transitory computer-readable storage medium and installed at one or more of host computer 102, client computers 104, storage system 108, and/or the control station 124 of FIG. 1. Data filtration and export system 126 can include one or more of a computer processor, memory, storage means, network device, and input and/or output device and/or interfaces. Data filtration and export system 126 is incorporated into system 100 and can be entirely or partially at/within host computer 102, one or more client computers 104, network 106, storage system 108, vehicle 118, and/or control system 124.

Data filtration and export system 126 allows for a user, which can be a host (e.g., at host computer 102) or a client (e.g., at client computer 104), to create a first template that includes steps that, when performed, automatically selects and organizes a subset of data from the HUMS data (i.e., filters the HUMS data into a subset of data that is more easily understood and analyzed by an end user/client). The process of selecting and organizing the subset of data creates a filtered data set that includes the selected and organized subset of data with the filtered data set able to be automatically exported. The subset of data can also be organized into a report that can include one or more data views 144 of raw numerical values, charts, graphs, and/or other formats that allow the end user/client to analyze the subset of data. The report can be automatically or manually exported to be analyzed by the end user/client. Data filtration and export system 126 is capable of automatically exporting the filtered data set to designated export locations 149, which can be one or more client computers 104 or other locations. Data filtration and export system 126 allows for the creation and execution of multiple templates (creating multiple different filtered data sets comprising different subsets of data) and the export of the filtered data sets to different export locations 149 simultaneously.

Data filtration and export system 126 includes one or more modules operable to access, filter, export, and/or display data, such as HUMS data from vehicle 118 communicated from collection system 117 and/or one or more sensors 119. Each of these modules can include executable software instructions and/or digital or analog hardware circuitry. Data filtration and export system 126 includes a number of components for filtering and exporting HUMS data, including storage module 128, monitoring module 130, execution module 132, export module 134, filter 136, and GUI 138. These components can all be within one computing device that includes a processor, memory, storage means, network device, and input and/or output devices and/or interfaces, can be incorporated into a computing device of another component, or each of these components can be remote from one another and operatively connected to one another by network 106, direct client interface 112, peer-to-peer interface 114, or other means.

Storage module 128 is a storage means configured to store a template. As will be discussed later, the template is a savable search query that includes executable steps for selecting the subset of data from the HUMS data and organizing the subset of data into a filtered data set. The template can also include information regarding whether the filtered data set is to be automatically exported and to which export location 149 the filtered data set is to be exported. Storage module 128 can be located within storage system 108 or can be a separate digital storage means.

Monitoring module 130 is configured to monitor watched folder 148 for the addition of the HUMS data file and inform execution module 132 and other components of data filtration and export system 126 that the HUMS data file is now present for filtering and export. Watched folder 148 is a digital folder located at/within storage system 108 or another location, such as host computer 102, one or more client computers 104, vehicle 118, and/or control station 124. Addition of the HUMS data file to watched folder 148 can be performed automatically, such as when vehicle 118 has completed an operation cycle, or manually, such as when an initial user (e.g., a user at host computer 102) or end user (e.g., a user at client computer 104) wants data filtration and export system 126 to begin filtering and exporting the data. Monitoring module 130 can be a computing device including a processor, memory, storage means, network device, and input and/or output devices and/or interfaces, or can be incorporated into a computing device of another component of data filtration and export system 126.

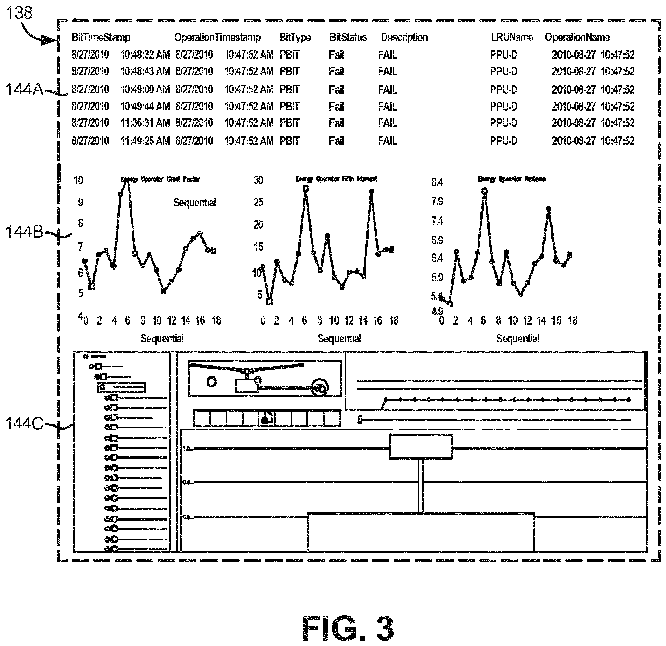

Execution module 132 is operatively coupled to storage module 128 and monitoring module 130. Execution module 132 can be a computing device including a processor, memory, storage means, network device, and input and/or output devices and/or interfaces, or can be incorporated into a computing device of another component of data filtration and export system 126. Execution module 132, when informed by monitoring module 132 that the HUMS data file has been added to watched folder 148, filters the HUMS data file using the executable steps saved/stored within the template to select the subset of data from the HUMS data and organize the subset of data (i.e., filter the data) into an arrangement that is easily understood by the end user accessing the subset of data at one or more export locations 149. The execution module 132 creates the filtered data set, which is the subset of data created by execution module 132 through the use of the template. The filtered data set can be raw data or can be formatted into any digital file format readable by the computing device at export locations 149, such as by one or more client computers 104 or other locations to which the filtered data set is being exported. Execution module 132 can be configured to format the filtered data set into a format readable at export locations 149, such as an Extensible Markup Language (XML) file, a Comma Separated Value (CSV) file, a Portal Document Format (PDF) file, an Excel file, a Joint Photographic Experts Group (JPEG) file, a word document, a PowerPoint file, or another file format desired by the end user/client viewing and analyzing the filtered data set. In another example, the filtered data set can be formatted by another component of data filtration and exporting system 126, such as export module 134. Further, execution module 132 can be configured to automatically create a copy of the filtered data set and save/store that copy of the filtered data set in a predefined location, such as host computer 102, one or more client computers 104, storage system 108, control station 124, storage module 128, or another location. Further, execution module 132 can be configured to organize the subset of data into a report that includes one or more data views 144 (an example of which is shown in FIG. 3) of raw numerical values, charts, graphs, and/or other formats that allow the end user/client to analyze the subset of data. This report can then be manually exported as is or the data that makes up this report can be converted into a format readable at export locations 149, such as an Extensible Markup Language (XML) file, a Comma Separated Value (CSV) file, a Portal Document Format (PDF) file, an Excel file, a Joint Photographic Experts Group (JPEG) file, a word document, a PowerPoint file, or another file format desired by the end user/client viewing and analyzing the filtered data set that is manually exported.

Export module 134 is operatively coupled to execution module 132 and can be operatively connected to other components of data filtration and export system 126. Export module 134 is configured to automatically export the filtered data set(s) to export locations 149, which can be one or more client computers 104, host computer 102, storage system 108, control station 124, and/or other locations. Export module 134, like many other components of data filtration and export system 126, can be a computing device including a processor, memory, storage means, network device, and input and/or output devices and/or interfaces, or can be incorporated into a computing device of another component of data filtration and export system 126. Export locations 149 can be designated by a user prior to the addition of the HUMS data to watched folder 148 such that when the HUMS data is added to watched folder 148, data filtration and export system 126 filters the HUMS data (according to the steps provided by the template) and then automatically exports that subset of data (i.e., the filtered data set) to the designated export locations 149 without the need for a user to perform any tasks or take any action. The automatic export of the filtered data set can utilize network 106, direct client interface 112, peer-to-peer interface 114, or another means to communicate the filtered data set to export locations 149.

Filter module 136 is operatively coupled to storage module 128 and can be operatively coupled to execution module 132, export module 134, and other components of data filtration and export system 126. Filter module 136 is configured to create the template by designating the subset of data that will be selected and by designating the arrangement/organization of the subset of data that will comprise the filtered data set. Filter module 136 can also designate the format of the to-be-created filtered data set and the location to which export module 134 will export the filtered data set after it is created by execution module 132. Filter module 136 can use past HUMS data (i.e., HUMS data from a previous operation cycle of vehicle 118) as example HUMS data to aid the user in determining which type of data to select and how to arrange/organize the data in the filtered data set to be most useful to the end user. Further, filter module 136 can use past HUMS data as example HUMS data to aid the user in determining which type of data to select and how to arrange/organize the data into a report (as shown in FIG. 3) that can then be manually exported. The subset of data selected to be included in the filtered data set and/or the report can be dependent upon the type of data in the HUMS data file and the data needs/desires of the end user accessing the filtered data set and/or the report at export locations 149. The report can be in any of the previously mentioned formats.

Filter module 136 can also be configured to create a template that selects and organizes the HUMS data to form a filtered data set that includes a subset of data from past HUMS data (i.e., historical HUMS data) to allow an end user/client to compare the HUMS data from the current operation cycle with HUMS data from previous operation cycles. For example, a template can be created by filter module 136 that creates a filtered data set that includes engine torque and airspeed over the past sixty days. In this example, as vehicle 118 performs new operation cycles, new torque and airspeed data is added to the filtered data set that is then automatically exported to export locations 149. This capability allows the end user/client to more easily compare past and present data.

GUI 138 includes functionality to provide a user with the visual capabilities to create the template. GUI 138 can be operatively coupled to storage module 128, monitoring module 130, execution module 132, export module 134, and filter module 136. GUI 138 can have access to the HUMS data wherever the HUMS data is being stored, such as at host computer 102, client computers 104, network 106, storage system 108, vehicle 118, control station 124, or another location. In some examples, GUI 138 includes functionality to present the entirety of the HUMS data, examples of the subset of data that will be included in the to-be-created filtered data set, the actual data in the filtered data set, and export locations 149 to which the filtered data set is to be exported. GUI 138 can include functionality to present this data in a desired format or data view 144, such as one or more grids, charts, graphs, and other visual formats as shown and will be described with regards to FIG 3.

Referring to FIG. 2B with continued reference to FIG. 2A, an exemplary GUI 138 is shown for creating the template by designating the subset of data that will be selected to create the filtered data set and by designating the arrangement/organization of the subset of data that makes up the filtered data set. GUI 138 includes filter/export panel 142 and template input field 140. Filter/export panel 142 presents at least one graphical representation 150 corresponding to one or more of the interactive lists of filter statements 152. In the illustrated example of FIG. 2B, graphical representation 150 includes four filter statements 152A-152D in a nested or hierarchal list.

The interactive list of filter statements 152 that create the template by designating the subset of data that will be selected to create the filtered data set and by designating the arrangement/organization of the subset of data that makes up the filtered data set may be selected according to one or more groups of tools, which can aid in selecting the data depending on the data desired and/or needed by the end user/client. For example, if the end user desires a subset of data of the HUMS data that pertains to a drivetrain of vehicle 118, a premade drivetrain tool can be designated that would select all HUMS data relevant to the drivetrain and arrange/organize that data to be most useful to an end user viewing the drivetrain data. Further filtering may need to be performed (i.e., a subset of the drivetrain data may need to be selected with the other drivetrain data being unselected) if the drivetrain data contains too much data to easily and efficiently be exported and understood by the end user/client. Example tools or applications include mechanical diagnostics tools, fleet management tools, presentation tools, and the like. Other example tools include built-in test, events, exceedances, flight parameter trends (e.g. airspeed, torque, etc.), usage/logbook (i.e., time or count attributed to parts), rotor vibration, rotor track, rotor tuning, flight parameter histograms, maintenance actions, parts watch list, power assurance (i.e., engine diagnostics), root cause analysis, software versions, etc. Accordingly, selections in some types of filter statements 152A-152D may be available for certain tools, but not other tools, depending on the capabilities of the particular tool. Additionally, a template may contain subset of data from multiple tools, so a user may need to access and select the data from multiple tools.

Parameter(s) in the interactive list of filter statements 152 are selectable by a user (which can be the end user/client or a host creating the template) to select and arrange/organize the HUMS data in a desired way. Each filter statement in the interactive list of filter statements 152A-152D is selectable from a group of filter types 154. In some examples, the filter type(s) in the group of filter types 154 are generated according to the respective tool selected, causing the interactive list of filter statements 152 to update depending on the tool selected.

Filter types 154 correspond to subsets of data of the HUMS data from sensors 119 located on vehicle 118, for example. Example filter types include vehicle or system type, subsystem type, built-in-test (BIT) type, aircraft model type, vendor or original equipment manufacturer (OEM) type, customer type, location type, operational cycle or flight number type, and the like. Other example filter types include aircraft tail number, event name, event timestamp, exceedance name, exceedance timestamp, health indicator name, part name, sensor name, condition indicator value or name, avionics parameter name, indicator type, indicator validity, indicator sensor name, parameter value, indicator acquisition timestamp, operation start timestamp, parameter data set name, parameter type, rotor name, shaft order name, capture window name, user name, version name, etc. In some examples, each category of data in the HUMS data corresponds to a filter type 154 selectable in the interactive list of filter statements 152A-152D. Each of filter statements 152A-152D includes a selected filter from the group of filter types 154. An example selection of filter type 154 from the group of filter statements 152A-152D is shown in FIG. 2C.

In some examples, the group of filter types 154 can be updated in response to at least one selection from the group of filter types 154. In some instances, the multiple users/clients interacting with system 100 are associated with different organizational entities, or assigned with different responsibilities, and may have different levels of interest with the HUMS data and may desired to view different subsets of data. Accordingly, the user is able to select filters in any desired order, or hierarchy, even though the multiple users have access to an instance of the same tool accessing the HUMS data. The group of filter types 154 can dynamically update with values based on one or more previous selections made, or parameters set, in the interactive list of filter statements 152. Thus, multiple users/clients can create multiple templates, which include executable steps to create multiple different filtered data sets that include different subsets of data.

The group of filter types 154 can be configured to dynamically update based on the HUMS data present and in response to previous selection(s) of filters from the group of filter types 154 and/or other parameters in the interactive list of filter statements 152. Accordingly, the various filter options presented in the filter/export panel 142 can represent the pool of available HUMS data present, such as one or more table columns and column relationships, table rows, and/or table fields, thereby reducing the need to generate additional templates in instances where the HUMS data needed to make the filtered data set is unavailable.

Each filter statement 152 in the interactive list of filter statements 152A-152D can be selectable from a group of sub-filter types 156 to further characterize the filter type 154 in the respective filter statement 152. Example sub-filter types include any of the filter types discussed herein. Each of the filter statements 152A-152D includes a selected sub-filter from the group sub-filter types 156. An example selection from the group of sub-filter types 156 for one of filter statements 152 is shown in FIG. 2D.

The group of sub-filter types 156 can be configured to dynamically update in response to at least one selection from the group of filter types 154. In some examples, the group of sub-filter types 156 can be configured to dynamically update based on the HUMS data present. In other examples, the group of sub-filter types 156 can be configured to dynamically update in response to previous selection(s) from the group of filter types 154 and/or sub-filter types 156. Accordingly, a user is able to select a sub-filter from the group of sub-filter types 156, while having flexibility in the selection of filters in any desired order or hierarchy. The filtering techniques described herein allow a user to specify filtering parameters or criteria such that most or every field of view or dataset of the HUMS data is available for filtering and exporting.

Each filter statement 152 includes a filter option from the list of filter/export options 146. Each filter type in the group of filter types 154 and/or each sub-filter in the group of sub-filter types 156 is linked to a list of filter/export options 146. The list of filter/export options 146 is configured to dynamically update in response to selections from the group of filter types 154 and/or the group of sub-filter types 156. In one example, the list of filter/export options 146 is dynamically updated to correspond to selected filter types 154 and/or sub-filter types 156 in filter statements 152A-152D having the same or higher level of indenture than the respective filter statement 152.

The list of filter/export options 146 can be updated according to the HUMS data present and/or according to the selected values of filter types 154 and sub-filter types 156 in the interactive list of filter statements 152. Utilizing these techniques, data filtration and export system 126 is operable to indicate to a user the available filter types 154 and/or sub-filter types 156 corresponding to the HUMS data that is present for filtration and export.

Each filter statement is associated with operator 158. Operator 158 acts on the list of filter/export options 146 according to the respective filter and/or sub-filter in the filter statement 152. Example operators 158 include basic mathematical operators, logical operators, and the like. Other example operators include timestamp operators (e.g., earlier than, later than, between, or within a previous number of days, hours and/or minutes), string operators (e.g., contains, in the list of, etc.), and a range of values (having two input fields for options rather than just a single field). In another example, operators 158 correspond to one or more data types, such as an integer, character, text string, Boolean, date, datetime, decimal (i.e., floating point), or binary.

Referring to FIG. 2E, the auto-export feature is shown in GUI 138 of data filtration and export system 126. Template name 160 is an entry box that allows for a user to manually formulate/name the template. Saved template select 162 is a drop-down list of previously saved templates. Saved template select 162 allows a user to recall a previously saved template to rename that previously saved template and/or create a new template that includes data from the previously saved template.

Also included in the auto-export feature of GUI 138 is auto-export select 164, which allows the user creating the template to select whether the filtered data set created by execution module 132 using the steps designated in the template is to be automatically exported. Thus, auto-export select 164 allows for data filtration and export system 126 to automatically export the filtered data set (which contains a subset of data of the HUMS data) without the need for the user to take any action after the HUMS data file has been added to watched folder 148.

Referring to FIG. 2F, the export location designation feature is shown in GUI 138 of data filtration and export system 126. Path designation 168 is an entry box that allows the user to create one export location 149. Once the one export location 149 is designated, the one export location 149 is saved, which adds the one export location 149 to export location list 170. Path designation 168 can then be used to create another export location 149 and add that export location to export location list 170. As mentioned above, export locations 149 can be host computer 102, one or more client computers 104, network 106, storage system 108, vehicle 118, control station 124, or another location. Further, export locations 149 can be specific areas within each of those locations, such as an end user/client's email, a particular drive on the computer, a particular folder on a drive, etc. The user creating the template and designating export locations 149 can select one or more export locations 149 from export location list 170. If the template was designated as a template that creates a filtered data set that is automatically exported, the filtered data set will be exported to any of the export locations 149 that are selected from export location list 170. Template select 172 allows a user to select the template/filtered file that will be exported to the selected export locations 149 on export location list 170. The templates shown in template select 172 were created using data filtration and export system 126 as shown in FIGS. 2B-2E. Thus, any template can be configured such that the filtered data set that results from that template is automatically exported to a designated set of export locations 149. The designation of the export location 149 to which the filtered data set will be exported can be included with the template itself. Each filtered data set can be exported to multiple export locations 149, with the filtered data set being selected, organized, and formatted so as to be tailored to the specific needs of the end user/client accessing the data at export locations 149.

FIG. 3 is a sample report exported by data filtration and export system 126, with an example of data views 144 viewed using GUI 138. While shown as being viewed using GUI 138, the sample report can be formatted such that no GUI 138 is necessary to see data views 144, so the end user/client does not need to have access to GUI 138 and/or data filtration and export system 126 to view data views 144. The sample report shown in FIG. 3 is formatted in a particular file format to meet the needs of the end user/client and allow the end user/client to quickly and easily analyze the subset of data. Data views 144 can include one or more tables 144A, charts 144B, or interactive graphics 144C. The interactive graphic 144C can be configured to depict the subset of data of the HUMS data in a desired format and according to at least one interactive list of filter statements 152. Utilizing the techniques discussed herein, the exporting and presenting of a subset of the HUMS data is not constrained to a specific hierarchy or predefined structure.

The filtered data set as described can be the numerical data that is further organized into data views 144 by the end user/client, while the report as shown in FIG. 3 can include only a subset of the filtered data set that comprises only the data necessary for data views 144. Thus, the report as shown in FIG. 3 can be a subset of the data in the filtered data set and can be automatically or manually exported in a format that is easily understood by the end user/client.

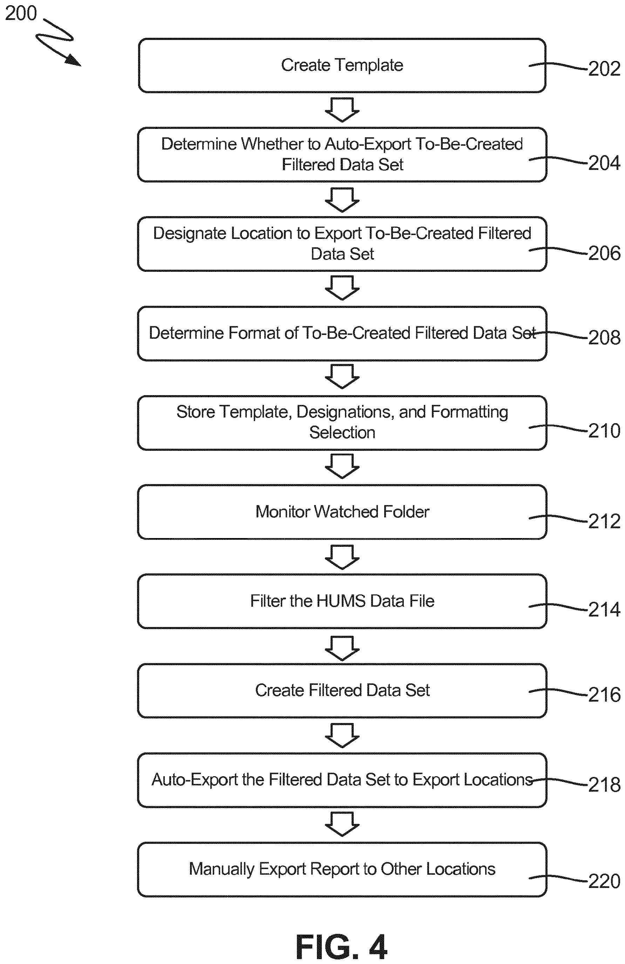

FIG. 4 is flow diagram of the process for exporting the filtered data set, which is a subset of HUMS data. Data filtration and export process 200 includes creating the template 202, determining whether to automatically export the to-be-created filtered data set 204, designating the export location for the to-be-created filtered data set 206, determining the format of the to-be-created filtered data set 208, storing the template, export location designation(s), and formatting selection 210, monitoring the watched folder 212, filtering the HUMS data file using the steps of the first template to select and organize the subset of data 214, creating the filtered data set 216, automatically exporting the filtered data set to the export location(s) 218, and optionally manually exporting a report or other data (such as raw data in XML, CSV, PDF, JPEG, or other formats) to export locations 220.

First, the template or multiple templates are created 202 through the use of filter module 136 of data filtration and export system 126 as described with regards to FIGS. 2A-2D. Each template includes executable steps for selecting a particular subset of data from the HUMS data file and organizing that subset of data. If the template has been created and saved for a previous set of HUMS data and the user desires to reuse that template, this step may not be necessary to data filtration and export process 200 as the saved template can be used again. In creating the template, the HUMS data is filtered to select only a subset of the data, and the subset of data is organized into an arrangement that is desirable to the end user.

Next, whether to automatically export the to-be-created filtered data set is determined 204. Because data filtration and export system 126 requires no action by the user after the HUMS data file is added to watched folder 148, the user should determine whether or not to automatically export the to-be-created filtered data set before the HUMS data file is added to watched folder 148. FIG. 2E discusses how to select to automatically export the filtered data set.

Designating the location to export the to-be-created filtered data set 206 is next. If the to-be-created filtered data set is not being automatically exported, then this step does not need to be performed as the export location of the filtered data set can be selected after the creation of the filtered data set if/when the filtered data set is being manually exported. Designating the location to export the to-be-created filtered data set 206 is discussed with regards to FIG. 2F, with more than one export location 149 able to be designated for each filtered data set.

Step 208 is formatting or determining the formatting of the to-be-created filtered data set. The filtered data can be formatted into any file format readable at export locations 149, such as an XML file, a CSV file, a PDF file, an Excel file, a JPEG file, a word document, a PowerPoint file, or another file format desired by the end user viewing and analyzing the subset of data. Further, it may be necessary or desirable to format the filtered file into multiple different file formats.

Next, the template, export location designations, and formatting selections are stored 210 so that data filtration and export system 126 can recall them and use them to create the filtered data set and automatically export the filtered data set. This information is stored in storage module 128, which can be an independent component or incorporated into another component, such as host computer 102, one or more client computers 104, network 106, storage system 108, control station 124, or one or more of the components of data filtration and export system 126.

The step of monitoring the watched folder 212 for the addition of the HUMS data file is performed by monitoring module 130. As discussed above, watched folder 148 is a location to which the HUMS data file is added (either by a user or automatically by system 100) to begin the automatic filtration (i.e., creation of the filtered file) and export of the filtered data set to export locations 149. Watched folder 148 can be located and incorporated into data filtration and export system 126 or can be located at and/or incorporated into another component of system 100, such as host computer 102, client computer 104, network 106, storage system 108, vehicle 118, or control station 124. If watched folder 148 is not located or incorporated into monitoring module 130, then monitoring module 130 is operatively coupled to watched folder 148 to monitor watched folder 148.

When monitoring module 130 determines that the HUMS data file has been added to watched folder 148, the HUMS data file is filtered using the steps of the first template to select and organize the subset of data 214. Step 214 is performed by execution module 132, which is operatively coupled to storage module 128 to access the template and operatively coupled to monitoring module 130 to receive a prompt that the HUMS data file has been added to watched folder 148. Further, execution module 132 can be operatively coupled to watched folder 148 to access the HUMS data file to which the steps of the template are applied, or execution module 132 can access the HUMS data file another way.

After step 214, the filtered data set is created 216 by execution module 132. The filtered data set includes the selected and organized subset of data. Optionally, the filtered data set can be saved/stored in storage module 128 or another location.

Next, the filtered data set is automatically exported to the export locations 218. Whether the filtered data set was to be automatically exported was determined in step 204, while export locations 149 were designated in step 206. The filtered data set is automatically exported by export module 134 after the filtered data set is created. Export module 134 can be operatively coupled to execution module 132 and/or storage module 128 to access the filtered data set.

Finally, a user (either a user with access to data filtration and export system 126 or an end user at, for example, client computer 104) can create a report that includes numerical values, graphs, charts, and/or other formats (such as XML, CSV, PDF, JPEG, Excel, word, or PowerPoint formats) that are easily understood by the end user and manually export the report to various export locations 220. The manual export can be accomplished by sending the report to an end user/client's email, posting the report on a shared drive, a type of export utilized by the auto-export, or any other way of sending information from one location to another. The step of manually exporting the report to other export locations 220 may be unnecessary if such information is not needed/desired by the end user. In such instances, step 220 can be omitted from data filtration and export process 200. Manual export of the report can be performed by export module 134.

The steps of data filtration and export process 200 can be performed for multiple templates simultaneously such that multiple filtered data sets are created and automatically exported simultaneously after the HUMS data file is added to watched folder 148. Further, storage module 128 is configured to store more than one template, execution module 132 is configured to perform the steps of more than one template to create more than one filtered data sets, and export module 134 is configured to automatically export more than one filtered data set to more than one export location 149. Data filtration and export system 126 allows for HUMS data to be selectively chosen and organized (i.e., filtered) and automatically exported to multiple export locations 149 without the need for a user to take any action after the HUMS data file is added to watched folder 148.

### Discussion of Possible Embodiments

The following are non-exclusive descriptions of possible embodiments of the present invention.

A method for exporting health and usage management system (HUMS) data includes storing a first template on a computing device including a processor and a memory storage device, monitoring a folder for the addition of a HUMS data file; filtering the HUMS data file using steps set out in the first template to select and organize a first subset of data; creating a first filtered data set that includes the selected and organized first subset of data; and automatically exporting the first filtered data set to a first location. The first template includes executable steps for selecting the first subset of data from the HUMS data file and organizing the first subset of data.

The method of the preceding paragraph can optionally include, additionally and/or alternatively, any one or more of the following features, configurations, steps, and/or additional components:

Formatting the first filtered data set into a format readable at the first location.

The first filtered data set is formatted into an Extensible Markup Language (XML) file format before being automatically exported.

Creating the first template using a computing device including a processor, a memory storage device, and a graphic user interface with the creation of the first template including steps for filtering the data to select and organize the type of data that will be included in the first subset of data.

The first subset of data depends on the type of data in the HUMS data file and data needs of an end user accessing the first filtered data set at the first location.

Designating the first location to which the first filtered data set will be automatically exported prior to the addition of the HUMS data file to the folder.

Manually exporting a report that includes a data view.

Storing a second template on the computing device, filtering the HUMS data file using the steps of the second template to select and organize a second subset of data, creating a second filtered data set that includes the selected and organized second subset of data, and automatically exporting the second filtered data set to a second location. The second template including executable steps for selecting a second subset of data from the HUMS data file and organizing the second subset of data.

The first subset of data is different from the second subset of data.

The second location is different from the first location.

A system for exporting health and usage management system (HUMS) data includes a storage module, a monitoring module, an execution module, and an export module. The storage module is configured to store a first template with the first template including executable steps for selecting a first subset of data from a HUMS data file and organizing the first subset of data. The monitoring module is configured to monitor a digital folder for the addition of the HUMS data file. The execution module that is a computing device including a processor and a memory storage device. Additionally, the execution module is operatively coupled to the storage module and to the monitoring module and configured to filter the HUMS data file when the HUMS data file is added to the folder using the steps of the first template to select and organize the first subset of data to create a first filtered data set comprising the selected and organized first subset of data. The export module is operatively coupled to the execution module and is configured to automatically export the first filtered data set to a first location.

The system of the preceding paragraph can optionally include, additionally and/or alternatively, any one or more of the following features, configurations, steps, and/or additional components:

The digital folder is located in a storage system configured to store the HUMS data file.

The storage system is remote from the storage module, monitoring module, execution module, and export module and is configured to convey at least a second subset of the data in the HUMS data file to the execution module when prompted by the execution module.

The first subset of data is the same as the second subset of data.

The storage module is configured to store more than one template, the execution module is configured to perform the steps of more than one template to create more than one filtered data set, and the export module is configured to automatically export more than one filtered data set to at least the first location.

A filtering module operatively coupled to the storage module with the filtering module configured to create the first template.

The filtering module is configured to create the first template depending on the data in the HUMS data file and data needs of an end user receiving the first filtered data set at the first location.

The HUMS data file includes sensor readings collected by monitoring the operation of a vehicle.

The first location is a computing device including a processor and memory storage device that is remote from the export module.

The storage module, monitoring module, execution module, and export module are within one computing device including a processor and a memory storage device.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for exporting health and usage management system (HUMS) data, the method comprising:
storing a first template on a computing device including a processor and a memory storage device, the first template including executable steps for selecting a first subset of data from a HUMS data file and organizing the first subset of data;
monitoring a folder for the addition of the HUMS data file;
filtering the HUMS data file using the steps of the first template to select and organize the first subset of data;
creating a first filtered data set that includes the selected and organized first subset of data; and
automatically exporting the first filtered data set to a first location.

2. The method of claim 1, further comprising:
formatting the first filtered data set into a format readable at the first location.

3. The method of claim 1 or 2, further comprising:
creating the first template using a computing device including a processor, a memory storage device, and a graphic user interface, the creation of the first template includes steps for filtering the data to select and organize the type of data that will be included in the first subset of data.

4. The method of claim 1, 2 or 3, further comprising:
designating the first location to which the first filtered data set will be automatically exported prior to the addition of the HUMS data file to the folder.

5. The method of any preceding claim, further comprising:
manually exporting a report that includes a data view.

6. The method of any preceding claim, further comprising:
storing a second template on the computing device, the second template including executable steps for selecting a second subset of data from the HUMS data file and organizing the second subset of data;
filtering the HUMS data file using the steps of the second template to select and organize the second subset of data;
creating a second filtered data set that includes the selected and organized second subset of data; and
automatically exporting the second filtered data set to a second location.

7. The method of claim 6, wherein the first subset of data is different from the second subset of data.

8. A system for exporting health and usage management system (HUMS) data, the system comprising:
a storage module configured to store a first template, the first template including executable steps for selecting a first subset of data from a HUMS data file and organizing the first subset of data;
a monitoring module configured to monitor a digital folder for the addition of the HUMS data file;
an execution module that is a computing device including a processor and a memory storage device, the execution module operatively coupled to the storage module and to the monitoring module and configured to filter the HUMS data file when the HUMS data file is added to the folder using the steps of the first template to select and organize the first subset of data to create a first filtered data set comprising the selected and organized first subset of data; and
an export module operatively coupled to the execution module configured to automatically export the first filtered data set to a first location.

9. The system of claim 8, wherein the digital folder is located in a storage system configured to store the HUMS data file.

10. The system of claim 9, wherein the storage system is remote from the storage module, monitoring module, execution module, and export module and is configured to convey at least a second subset of the data in the HUMS data file to the execution module when prompted by the execution module.

11. The system of claim 8, 9, or 10, wherein the storage module is configured to store more than one template, the execution module is configured to perform the steps of more than one template to create more than one filtered data set, and the export module is configured to automatically export more than one filtered data set to at least the first location.

12. The system of any one of claims 8-11, further comprising:
a filtering module operatively coupled to the storage module, the filtering module configured to create the first template.

13. The system of claim 12, wherein the filtering module is configured to create the first template depending on the data in the HUMS data file and data needs of an end user receiving the first filtered data set at the first location.

14. The system of any one of claims 8-13, wherein the first location is a computing device including a processor and memory storage device that is remote from the export module.

15. The system of any one of claims 8-14, wherein the storage module, monitoring module, execution module, and export module are within one computing device including a processor and a memory storage device.
